# EUROPEAN PATENT APPLICATION

(11) **EP 2 116 987 A1**
(43) Date of publication of application: **11.11.2009**
(21) Application number: 09159590.0
(22) Date of filing: 07.05.2009
(51) Int. Cl.: G09F 9/37, G09F 13/24

(54) **Large format microfluidic digital display**

(30) Priority: 08.05.2008 US 117552
(71) Applicant: Palo Alto Research Center Incorporated, Palo Alto, California 94304 (US)
(72) Inventor: Peeters, Eric, Mountain View, CA 94041 (US); Uhland, Scott, Redwood City, CA 94062 (US); Schmaelzle, Philipp H., Los Altos, CA 94024 (US)
(74) Representative: Grünecker, Kinkeldey, Stockmair & Schwanhäusser Anwaltssozietät

(57) **Abstract**

Microfluidic pixels (110) are utilized to produce large format displays (billboards) (100) that are both digitally controllable and are light weight. Each microfluidic pixel (110) includes a wall having a front (display) surface, and a microfluidic system including a reservoir disposed behind the wall, a colorant fluid, a transparent display chamber disposed in front of the wall, a conduit, and a two-way pump. In the absence of colorant fluid in display chamber, the pixel (110) has a background appearance determined by the color (e.g., white) of the front wall surface. The pump receives a digital control signal from a digital control circuit to transfer colorant fluid from the reservoir to the display chamber by way of the conduit, whereby the pixel's appearance changes to a "colored" appearance determined by the color and amount of the colorant fluid in the display chamber.

## Description

### FIELD OF THE INVENTION

This invention relates to digital displays, and more particularly to digitally controllable large format (billboard) displays.

### BACKGROUND OF THE INVENTION

A significant demand exists to transition conventional paper and paste or printed Vinyl advertisement billboards to digitally controllable displays. LED based billboards have started to infiltrate the market, but significant costs are incurred while regulations limit their market penetration. Opportunity exists for a lightweight, reflective and/or transmissive digital display technology that is capable of remote access for display changeover. Reflective digital displays also lack the ability to display the full color spectrum which is in high demand. Green displays using less energy are also critical to the consumer advertising market.

There are two primary ways used today to address this display need: traditional printed (passive and active) billboards, and LED (active) billboards.

The financial issues with printed billboards include the labor cost of changeover, insurance cost of changeover, and the frequency of changeover. Trivision has improved the cost structure somewhat through rotating/scrolling signs that allow for multi-messages on a single billboard. However, Trivision units are usually limited to three advertisements. A critical limitation of printed billboards is the fact that most billboard locations/structures are grandfathered in resulting in significant limitations on structure modification. Governments (federal through local) set these restrictions which, in many locations, limit additions and ultimately revenue. The main avenue to revenue growth is having the ability to display more advertising content at the most expensive locations, which is the driver for digitally changeable boards.

As a result, LED displays have entered the outdoor advertising market. The primary issues with LED boards are a product of the government regulations. Restrictions on structure modification do not allow for retrofitting to accommodate heavier billboard displays. Grandfathered billboards exist under less restrictive regulations. Any required change to the support structure is an opportunity for local governments to reclassify it as a 'new' billboard structure, falling under the strict regulations. In many cases, this results in no new billboard "locations". Additionally, LED boards require major changes to the support structures because of their weight. Examples exist where the digital LED billboard was too heavy to suspend off of a non reinforced highway overpass. Other needs/upgrades include major electrical specifications beyond the existing capabilities for lighting posters and/or active cooling.
These are major barriers to upgrading printed posters with digital displays. Therefore, a significant opportunity exists in this market area for a lightweight digital display technology that could be mounted on existing structures without requiring additional facilities/construction. While not as significant, the high cost of a LED billboards is still important to note.

What is needed is a large format display (billboard) that is both digitally controllable (changeable) and has substantially (e.g., one to approximately ten times) the same weight to size ratio as conventional printed billboards.

### SUMMARY OF THE INVENTION

The present invention utilizes microfluidic pixels to provide a large format display (billboard that is both digitally controllable (changeable) and has substantially the same weight to size ratio as conventional printed billboards. The microfluidic pixels are arranged in rows and columns such that each pixel forms a corresponding portion of the resulting two-dimensional display surface. Each pixel includes a wall having a front (display) surface, and a microfluidic system including a reservoir disposed on a rear side of the wall, a colorant fluid, at least one transparent display chamber disposed in front of the wall (i.e., facing the front surface), a conduit that communicates between the reservoir and the display chamber, and a two-way fluid actuator (e.g., an electrochemical pump). In the absence of colorant fluid in display chamber, the display surface portion of each pixel has a background appearance determined by the front surface of the wall. The fluid actuator receives a digital control signal from a digital control circuit via a suitable passive or active matrix addressing backplane (or other wiring scheme), and is actuated in response to the control signal to transfer (pump) colorant fluid between the reservoir and the display chamber by way of the conduit, whereby the display surface portion of each pixel is selectively changeable from the background appearance (e.g., white) to a "colored" appearance that is generated when a selected amount of colorant fluid is transferred from the reservoir into the display chamber. In one embodiment, the fluid actuator utilizes electrochemical energy to generate hydrogen and oxygen bubbles in an aqueous based solution that apply a calculated actuation force against a deformable wall (e.g., an elastomeric membrane) that is shared by the reservoir, whereby the colorant fluid is forced out of the reservoir and into the display chamber. The term "microfluidic" is used herein to describe fluidic systems in which the quantity of colorant fluid displaced between the reservoir and the display chamber is in the range of 100 microliter or less. According to another aspect of the invention, the microfluidic pixels are produced almost entirely using polymer or other light-weight materials, thereby facilitating production of display 100 with a size and weight that is suitable replacing existing printed billboards without requiring modification to existing support structures. Accordingly, by selectively controlling all of the microfluidic pixels making up the entire display surface, the present invention provides a light weight, digitally controllable display that can be utilized with existing "grandfathered" billboard support structures, thereby avoiding costly retrofitting or support replacement.

According to various specific embodiments, the microfluidic pixels of the present invention are selectively constructed to produce "black-and-white" (two color), grayscale (multi-shaded), and multi-color displays. In one embodiment, "black-and-white" (two color) displays are formed by microfluidic pixels having opaque colorant fluid that completely masks the front surface (background) when disposed in the display chamber. In another embodiment, single display chamber "grayscale" (two color) displays are formed by microfluidic pixels that allows selective shading of the front surface by controlling the amount of a translucent colorant fluid transferred to the display chamber. In yet another embodiment, multi-color displays are produced using two or more microfluidic systems including corresponding display chambers that are arranged in series or parallel such that the front wall surface is only viewable through at least one of the two or more display chambers. In one specific embodiment, each pixel includes CMY colorant fluid displayed in a spatially serial configuration, as contrasted with the usual RGB spatially parallel configuration. The spatially serial configuration is an important factor in achieving good color in a reflective display. Each pixel includes three microfluidic systems including a stack of three independent display chambers disposed over a white front wall surface 121C, and structures for separately transferring a translucent cyan, magenta or yellow colorant fluid into each display chamber. Each of the pixels requires three distinct actuation currents for a unique CMY color. By controlling the amount of translucent colorant (e.g., cyan, magenta, and yellow) fluid transferred to each of the display chambers, a wide range of colors are generated. In an optional embodiment, each pixel of a CMY color display include a fourth microfluidic system that facilitates changing the color of the background wall, whereby a default solid color or message are displayable by pumping each of the colorant fluids and an opaque (e.g., white) background fluid into corresponding reservoirs disposed behind the pixel wall.

According to various specific embodiments, the microfluidic pixels of the present invention are selectively constructed to include one of a bladder-type display chamber, a diaphragm-type display chamber, a gravity-feed type display chamber, and a "sponge" type display chamber. A bladder-type pixelincludes an elastomeric membrane having a peripheral edge that is secured to the front surface of the wall and deforms outward when colorant fluid forced into a pocket defined between the front surface and the membrane. To facilitate colorant fluid flow into the pocket, the conduit between the reservoir and the display chamber is implemented by micro-channels that pass through the wall. A diaphragm-type pixel, a "baggie-type" membrane is disposed in a fixed volume chamber defined by a peripheral frame, a rigid transparent wall and the white front wall surface, whereby outward expansion of the "baggie-type" membrane is restricted by the rigid transparent wall, thus the displayed color achieves a more uniform appearance than that of the bladder-type pixel. A diaphragm-type color (e.g., CMY) pixel is formed by stacking two or more "baggie-type" display chambers onto the wall in a spatially serial arrangement, with each display chamber communicating with an associated reservoir by an associated conduit. A gravity-feed pixel includes one or more fixed volume chambers in a spatially serial arrangement into which colorant fluid is selectively transferred, and an optional oil-based purging (also for reducing possible staining of the walls and for proper wetting of the walls) system is used to force colorant fluid back into the associated reservoirs. A "sponge" type pixel includes a display chamber filled with a porous sponge-like material that soaks up ink and gets darker as more ink gets absorbed, and gets lighter again when oil is used to preferentially displace water based ink.

According to an embodiment of the present invention, the various pixels described above are produced using laminating techniques to achieve high production volume and low production costs.
In one embodiment of the the display of Claim 1, said first display chamber includes parallel rigid walls defining a cavity therebetween, and a level of said first colorant fluid in said cavity is determined by a volume of said first colorant fluid transferred from the first reservoir.
In a further embodiment the display further comprises a second fluid disposed in said cavity, wherein said second fluid is immiscible with said first colorant fluid.
In a further aspect a display is provided that has a display surface formed by a plurality of pixels arranged in an array such that each pixel forms a corresponding display surface portion, wherein each pixel comprises:
a wall including a front surface having a predetermined first appearance; and
a microfluidic system including means for selectively transferring a colorant fluid between a first location behind the wall to a display chamber positioned over the front surface, whereby the corresponding display surface portion of said each pixel is selectively changeable between said predetermined first appearance generated when substantially all of said colorant fluid is transferred behind the wall, and a second appearance generated when a selected amount of said colorant fluid is transferred into said display chamber.

### BRIEF DESCRIPTION OF THE DRAWINGS

These and other features, aspects and advantages of the present invention will become better understood with regard to the following description, appended claims, and accompanying drawings, where:

Fig. 1 is a front side perspective view showing a large format display according to a simplified general embodiment of the present invention;

Fig. 2 is a cross-sectional side view showing a pixel of the large format display of Fig. 1 according to a simplified specific embodiment of the present invention;

Figs. 3(A) and 3(B) are cross-sectional side views showing a black/white pixel of the large format display of Fig. 1 according to another simplified specific embodiment of the present invention;

Figs. 4(A) and 4(B) are front views showing the pixel of Figs. 3(A) and 3(B) during operation;

Figs. 5(A), 5(B) and 5(C) are cross-sectional side views showing a grayscale pixel of the large format display of Fig. 1 according to another simplified specific embodiment of the present invention;

Figs. 6(A), 6(B) and 6(C) are front views showing the pixel of Figs. 5(A)-5(C) during operation;

Figs. 7(A), 7(B), 7(C) and 7(D) are cross-sectional side views showing a color pixel of the large format display of Fig. 1 according to another simplified specific embodiment of the present invention;

Figs. 8(A), 8(B), 8(C) and 8(D) are front views showing the pixel of Figs. 7(A)-7(D) during operation;

Figs. 9(A) and 9(B) are cross-sectional side views showing a variable background pixel of the large format display of Fig. 1 according to another simplified specific embodiment of the present invention;

Figs. 10(A) and 10(B) are front views showing the pixel of Figs. 9(A) and 9(B) during operation;

Figs. 11(A) and 11(B) are cross-sectional side views showing a bladder-type pixel of the large format display of Fig. 1 according to another simplified specific embodiment of the present invention;

Figs. 12(A) and 12(B) are front views showing the pixel of Figs. 11(A) and 11(B) during operation;

Figs. 13(A) and 13(B) are cross-sectional side views showing a diaphragm-type pixel of the large format display of Fig. 1 according to another simplified specific embodiment of the present invention;

Figs. 14(A) and 14(B) are front views showing the pixel of Figs. 13(A) and 13(B) during operation;

Fig. 15 is cross-sectional side view showing a color diaphragm-type pixel of the large format display of Fig. 1 according to another simplified specific embodiment of the present invention;

Fig. 16 is a simplified front view showing the color diaphragm-type pixel of Fig. 15 in additional detail;

Fig. 17 is cross-sectional side view showing a first gravity fill color pixel of the large format display of Fig. 1 according to another simplified specific embodiment of the present invention;

Fig. 18 is cross-sectional side view showing a second gravity fill color pixel of the large format display of Fig. 1 according to another simplified specific embodiment of the present invention; and

Fig. 19 is an exploded perspective view showing a laminated pixel according to another embodiment of the present invention.

### DETAILED DESCRIPTION OF THE DRAWINGS

The present invention relates to an improvement in large format displays. The following description is presented to enable one of ordinary skill in the art to make and use the invention as provided in the context of a particular application and its requirements. As used herein, directional terms such as "upper", "upwards", "lower", "downward", "front", "rear", are intended to provide relative positions for purposes of description, and are not intended to designate an absolute frame of reference. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

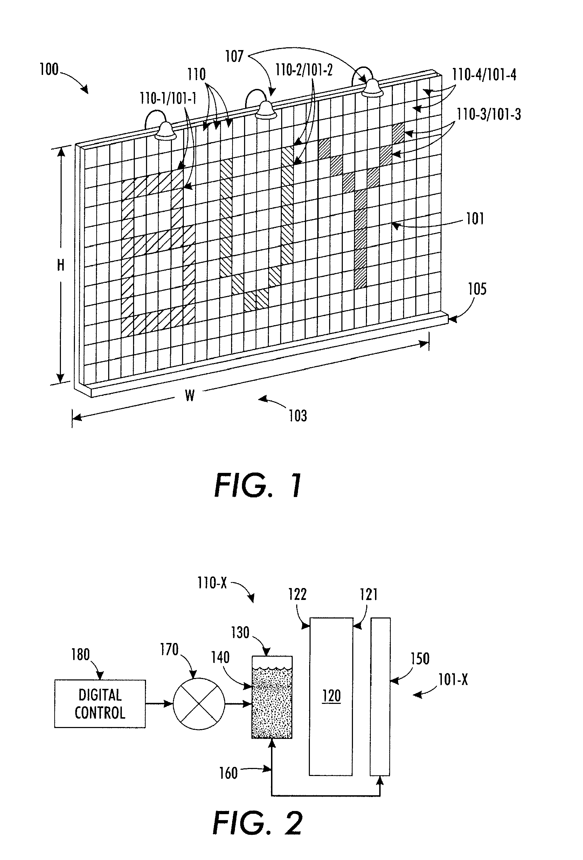

Fig. 1 is a front side perspective view showing a large format display 100 including an array of microfluidic pixels 110 according to a simplified specific embodiment of the present invention. Pixels 110 are arranged in rows and columns such that each pixel 110 forms a corresponding portion of the resulting two-dimensional display surface 101. Display 100 is supported on a support structure, e.g., including a support base 103 and a support frame 105.

Fig. 2 is a cross-sectional side view showing a generalized microfluidic pixel 110-X of large format display 100 (see Fig. 1). Each pixel 110-X includes a wall 120 having a front surface 121 and an opposing back surface 122, and a microfluidic system including a reservoir 130 disposed on a rear (first) side of the wall (i.e., facing back surface 122), a colorant fluid 140 (shown disposed in reservoir 130), at least one transparent display chamber 150 disposed on a front (second) side of the wall (i.e., facing front surface 121), a conduit 160 that communicates between reservoir 130 and display chamber 150, and a two-way fluid actuator 170. In accordance with a aspect of the invention, front surface 121 is painted or otherwise produced with a predetermined background (first) appearance (e.g., white) such that, in the absence of colorant fluid 140 in display chamber 150, display surface portion 101-X has the background appearance. Fluid actuator 170 receives a digital command signal from a digital control circuit 180, which may be included in each pixel 110-X or shared by a group of pixels, and is thereby actuated to transfer (pump) colorant fluid 140 between the reservoir 130 and the display chamber 150 by way of conduit 160. By selectively transferring colorant fluid 140 between reservoir 130 and display chamber 150, display surface portion 101-X of pixel 110-X is selectively changeable between the background appearance (e.g., white), which is generated substantially all of colorant fluid 140 is transferred into reservoir 130, and a "colored" (second) appearance that is generated when fluid actuator 170 transfers a selected amount of colorant fluid 140 from reservoir 130 though conduit 160 into display chamber 150. Referring again to Fig. 1, the resulting appearance of display 100 is thereby selectively controlled to produce a desired appearance (e.g., to display the word "BUY" as indicated in Fig. 1) by controlling selected first pixels 110-1 to produce darkened display surface portions 101-1 that collectively form a "B", selected second pixels 110-2 to produce darkened display surface portions 101-2 that collectively form a "U", selected third pixels 110-3 to produce darkened display surface portions 101-3 that collectively form a "Y", and by controlling the remaining pixels 110-4 such that their associated display surface portions 101-4 produce the background appearance (e.g., white).

In accordance with an embodiment of the present invention, fluid actuator 170 is implemented using an aqueous solution disposed in a reservoir chamber containing opposing electrodes and having at least one that is shared by reservoir 130. The control signals transmitted to fluid actuator 170 generate opposite potentials on the electrodes, producing a current through the aqueous based solution, whereby the resulting electrochemical energy generates hydrogen and oxygen bubbles in the reservoir chamber. By controlling the volume and/or pressure of hydrogen and oxygen bubbles in the reservoir chamber, a calculated actuation force is generated that displaces the . The displaced forces colorant fluid 140 out of reservoir 130, through conduit 160 and into display chamber 150. To reverse the electrochemical reaction and to collapse the hydrogen and oxygen bubbles, the electrodes are electrically shorted together, whereby resilient collapse of the generates a vacuum force (which can also be assisted with an overpressure from the display chamber side, e.g., by sealing the display chamber under one or more atmospheres of pressure) in reservoir 130 that draws (sucks) colorant fluid 140 out of display chamber 150 and back into reservoir 130 through conduit 160. This electrochemical pump is described in additional detail along with other potential embodiments of fluid actuator 170 in co-owned and co-pending U.S. Patent Application No. xx/xxx,xxx, entitled "FLUID ACTUATOR FOR DIGITALLY CONTROLLABLE MICROFLUIDIC DISPLAY", which is incorporated herein by reference in its entirety. In other embodiments, fluid actuator 170 is implemented using one of piezoelectric, differential (bimetallic) thermal expansion mechanisms, and shape memory alloy mechanisms.

According to alternative embodiments, display 100 is a constructed to serve as a reflective type display (i.e., similar to conventional printed billboards), or constructed to operate as a transmissive (backlit) type display by forming wall 120 using light transmissive materials. When wall 120 is produced using opaque materials, display 100 is limited to reflective applications that are suited for sunny environments, and may be viewed at night using external lights (e.g., lamps 107, see Fig. 1) that are directed onto display surface 101. Accordingly, display 100 is suited for replacing existing printed billboards that utilize existing external lights similar to lights 107 shown in Fig. 1. In an alternative embodiment, wall 120 is produced using semi-transparent materials and a suitable backlight arrangement is provided that directs light through back surface 122, whereby display 100 operates as a transmissive type display such that display surface 101 "glows" without external lighting.

According to an aspect of the invention, control over the operational state of pixels 110 (i.e., the appearance of display surface 101) is digitally controlled by way of control signals transmitted to pixels 110 from a digital control circuit 180. In one embodiment, display 110 includes a plurality of panels (not shown), where each panel includes pixels 110 arranged in ten (10) rows and thirty-five (35) columns, with an exemplary unit panel/tile size being one to 10 square feet (e.g., one-by-one ft or two-by-two ft), where each panel includes an associated digital control circuit 180 that transmits control signals to each pixel of the panel, e.g., by way of a printed circuit board (PCB) type backplane using techniques described below. Control signals may be stored in non-volatile memory by digital control circuit 180, or may be transmitted to digital control circuit 180 using wired or wireless communication. Providing each panel with an associated digital control circuit 180 facilitates modularization of display 100, whereby damaged or malfunctioning panels may be easily replaced with new panels. In another embodiment, a single digital control circuit 180 may be provided for display 100, but this would require a more complex routing system that may increase overall weight of display 100 above desired levels. However, in applications where there is not a weight problem, the main reasons for tiling are: (1) repairability, (2) ease of installation, (3) ease of manufacturing, and the main reasons for making the tiles autonomous displays in their own right is to avoid electrical row and column connectors between tiles. Although it is possible to combine several tiles, this approach may present problems for reliability.

According to an aspect of the invention, as set forth in the examples provided below, microfluidic pixels 110-X are produced almost entirely using polymer or other light-weight materials, thereby facilitating production of display 100 with a size and weight that is suitable replacing existing printed billboards without requiring modification to existing support structures. As used herein, the term "large formal display" is utilized herein to designate a "billboard" type display that is manufactured for mounting onto a support structure (e.g., support base 103 and frame 105), and having a display surface 101 that has a width W of at least four ft. and a height H of at least three ft. Typical large format "bulletin" sized billboard displays have a width W of forty-eight ft. and a height H of fourteen ft.

According to various embodiments set forth in the following specific embodiments, display 100 may be constructed using various types of pixels 110 that may be optimized for producing "black and white" (two color) displays, grayscale (multi-shaded) displays, and color displays having various display control features.

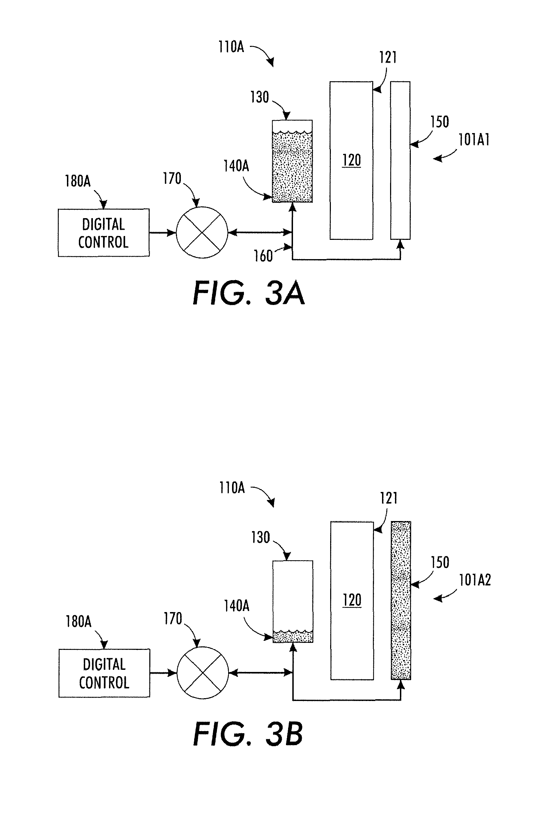

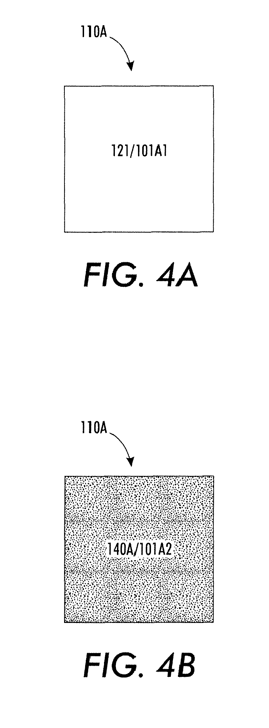

Figs. 3(A) and 3(B) are cross-sectional side views showing a pixel 110A for producing "black and white" displays according to a simplified specific embodiment of the present invention, and Figs. 4(A) and 4(B) are front views showing display surface portion 101A of pixel 100A during operation. Pixel 110A includes wall 120, reservoir 130, transparent display chamber 150, conduit 160 and fluid actuator 170 that are similar to those described above with reference to Fig. 2. However, pixel 110A is **characterized in that** colorant fluid 140A is opaque (e.g., a commercial inkjet ink including a pigment in a liquid), and digital control 180A is constructed to produce only two operating states: a "white" (background) appearance shown in Figs. 3(A) and 4(A), and a "black" (second appearance shown in Figs. 3(B) and 4(B). Referring to Figs. 3(A) and 4(A), the "white" appearance is generated when substantially all of opaque colorant fluid 140A is transferred into reservoir 130, whereby display surface portion 101A1 of pixel 110A comprises front surface 121 of wall 120, which is visible through transparent display chamber 150. Conversely, as shown in Figs. 3(B) and 4(B), the "black" appearance is generated when fluid actuator 170 transfers opaque colorant fluid 140A into display chamber 150, whereby display surface portion 101A2 of pixel 110A comprises the opaque colorant fluid 140A, which is disposed in display chamber 150 and masks front surface 121. Of course, the colorant fluid 140A may be any first color (e.g., blue or red), and front surface 121 may be any second color (e.g., yellow or orange), whereby any combination of two colors may be produced using pixels 110A. In addition, a preprinted message may be collectively formed by the front surfaces 121 of several adjacent pixels, which may then be displayed or masked using colorant fluid 140A. Although the options for forming large format display two-color pixels 110A are arguably limited, the construction of control circuit 180A is simplified in that the timing (duration) of the control signals applied to fluid actuator 170 are not as critical as in grayscale or color applications (described below). Thus, pixel 110A facilitates the production of inexpensive displays that may be utilized in certain applications where grayscale and color control are not important.

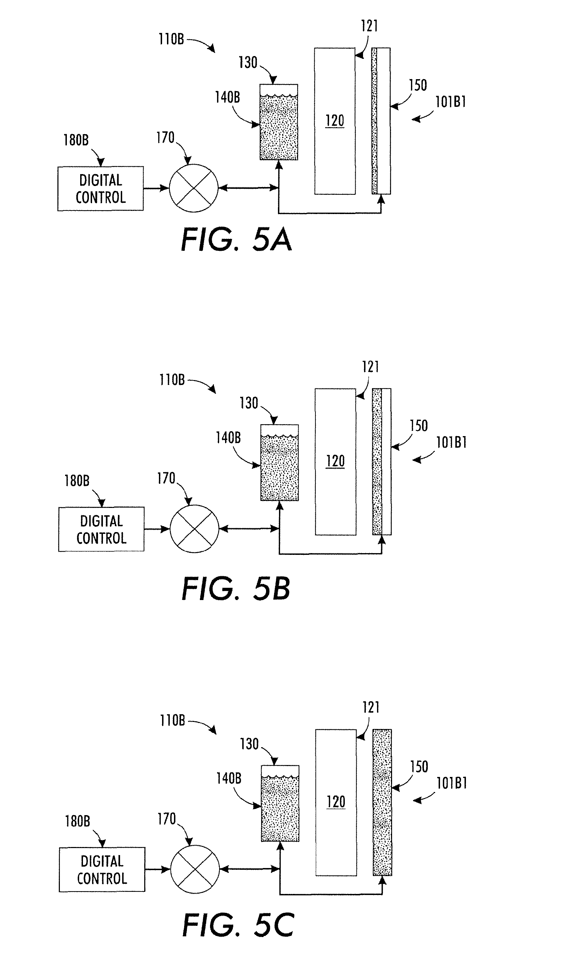

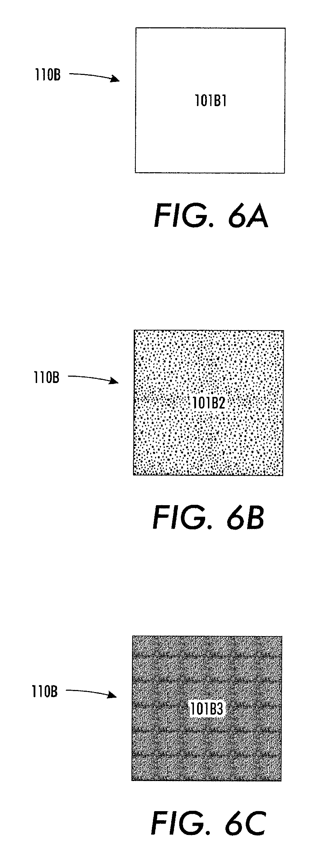

Figs. 5(A)-5(C) are cross-sectional side views showing a pixel 110B for producing two-color "grayscale" displays according to another simplified specific embodiment of the present invention, and Figs. 6(A)-6(C) are front views showing display surface portion 101B of pixel 100B during operation. Pixel 110B includes wall 120, reservoir 130, transparent display chamber 150, conduit 160 and fluid actuator 170 that are similar to those described above with reference to Fig. 2. However, pixel 110B is **characterized in that** colorant fluid 140B is translucent (e.g., a commercial inkjet ink including a color dye suspended in a clear liquid), and digital control 180B is constructed to produce a range of operating states (appearances) that are determined by the amount of colorant fluid 140B transferred into display chamber 150. For example, referring to Figs. 5(A) and 6(A), a "light" gray (or lightly colored) appearance is generated when a relatively small quantity of translucent colorant fluid 140B is transferred into display chamber 150, whereby display surface portion 101B1 of pixel 110B comprises a blend of the white (or other light colored) front surface 121 of wall 120 and a small amount of translucent colorant fluid 140B disposed in transparent display chamber 150. Similarly, referring to Figs. 5(B) and 6(B), a "medium" gray (or medium colored) appearance is generated when approximately half of display chamber 150 is filled with a corresponding quantity of translucent colorant fluid 140B, whereby display surface portion 101B2 of pixel 110B comprises a somewhat darker shade due to increased masking of the white front surface 121 by the larger amount of translucent colorant fluid 140B. Finally, referring to Figs. 5(C) and 6(C), a "dark" gray (or darkly colored) appearance is generated when display chamber 150 is filled with translucent colorant fluid 140B, whereby display surface portion 101B2 of pixel 110B comprises a darkest shade due to maximum masking of the white front surface 121 by translucent colorant fluid 140B. In order to control the shade of pixel 110B, the host display requires a (e.g., closed loop) control circuit 180B that is capable of sending control signals to fluid actuator 170 such that the corresponding desired amount of colorant fluid 140B is transferred into said display chamber 150. As such, pixel 110B facilitates forming large format display two-color pixels 110A that are capable of more variation of the display appearance than the black-and-white embodiment described above, the cost of constructing such large scale displays may be increased due to the increased complexity of control circuit 180B.

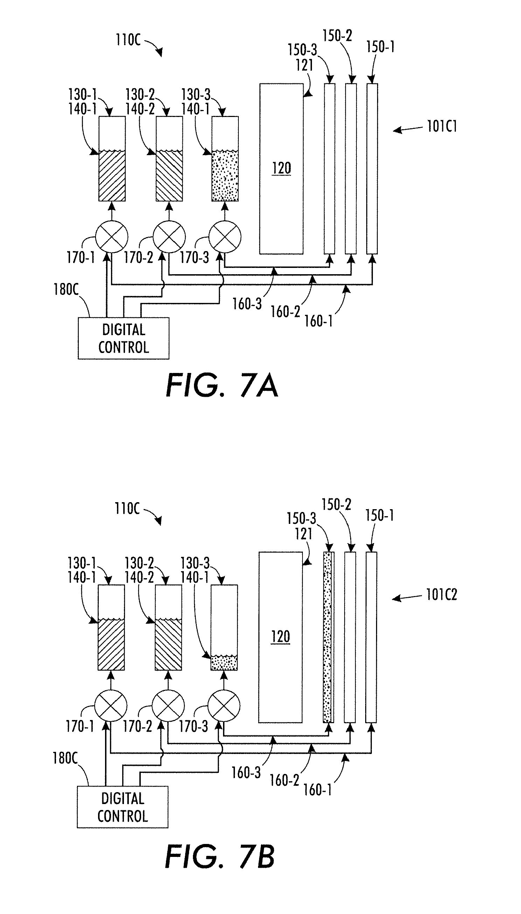

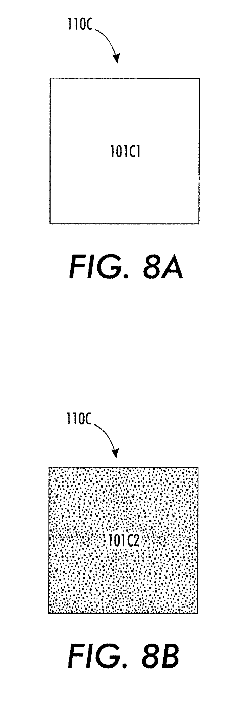

Figs. 7(A)-7(D) are cross-sectional side views showing a color pixel 110C according to another simplified specific embodiment of the present invention, and Figs. 8(A)-8(D) are front views showing the display surface of pixel 110C during operation. Color pixel 110C two or more microfluidic systems, each similar to one of the microfluidic systems described above, wherein the transparent display chambers of each of the two or more microfluidic systems are disposed over wall 120 such that front surface 121 is only viewable through at least one of the display chambers. Specifically, a first microfluidic system includes includes a first reservoir 130-1 disposed on the rear side of wall 120, a first colorant fluid 140-1, a transparent first display chamber 150-1 disposed on the front side of wall 120, a first conduit 160-1 communicating between reservoir 130-1 and display chamber 150-1, and a first pump 170-1 for selectively transferring first colorant fluid 140-1 between reservoir 130-1 and display chamber 150-1 through conduit 160-1. Similarly, the second microfluidic system includes a second reservoir 130-2, a second colorant fluid 140-2, a transparent second display chamber 150-2 disposed between first display chamber 150-1 and wall 120, a second conduit 160-2, and a second pump 170-2, and the third microfluidic system includes a third reservoir 130-3, a third colorant fluid 140-3, a transparent third display chamber 150-3 disposed between second display chamber 150-2 and wall 120, a third conduit 160-3, and a third pump 170-3. Although the disclosed embodiment includes three microfluidic systems capable of displaying three different colors, the appended claims are intended to cover pixels having two, four or more microfluid systems as well unless specifically limited to three.

In accordance with an aspect of the present invention, display chambers 150-1 to 150-3 are serially arranged ("stacked") over display surface 121 such that display surface 121 is only viewable through all three of display chambers 150-1, 150-2 and 150-3. The spatially serial configuration of display chambers 150-1 to 150-3 facilitates the production of reflective displays that utilize cyan-magenta-yellow (CMY) colorant fluids (i.e., a subtractive color system), as opposed to disposing the display chambers in a spatially parallel arrangement and the colorant fluids being the usual red-green-blue (RGB) color (i.e., an additive color system). In an exemplary embodiment, colorant fluid 140-1 includes a transparent fluid similar to that described above with reference to pixel 110B having a cyan dye produced in accordance with known techniques, colorant fluid 140-2 is a transparent fluid including a magenta dye, and colorant fluid 140-3 is a transparent fluid including a yellow dye. The spatially serial configuration of display chambers 150-1 to 150-3 in combination with the use of CMY colorant fluids 140-1 to 140-3 is an important factor in achieving a superior reflective display that is digitally controllable to display a wide range of colors at high luminance levels (e.g., the three CMY colors and combinations thereof). However, although the disclosed spatially serial CMY configuration is believed superior for front-lit (reflective) displays, in comparison to spatially parallel (RGB) configurations, which would be good for backlit displays, the appended claims are intended to cover pixels having spatially parallel display chambers unless specifically limited to the spatially serial configuration.

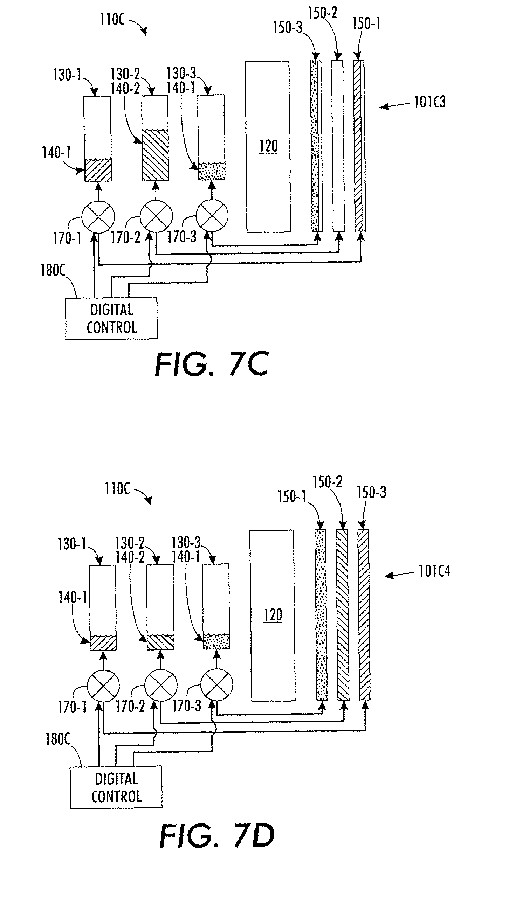

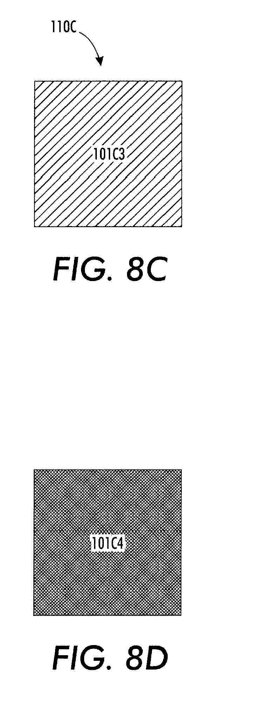

Large format displays (e.g., display 100, see Fig. 1) that incorporate an array of pixels 110C include a digital control circuit 180C that generates three distinct control signals (currents, voltages or charges) for independently controlling pumps 170-1 to 170-3 of each pixel 110C, whereby display surface portion of pixel 110C is selectively changeable between a white background appearance 101C1 (shown in Figs. 7(A) and 8(A), which is generated when substantially all of colorant fluids 140-1 to 140-3 are respectively transferred into reservoirs 130-1 to 130-3, and a colored appearance generated when a selected amount of at least one of colorant fluids 140-1 to 140-3 is transferred into its associated display chambers 150-1 to 150-3, respectively. For example, as indicated in Figs. 7(B) and 8(B), a yellow colored appearance 101C2 is generated by transferring an amount of yellow colorant fluid 140-3 from reservoir 130-3 into display chamber 150-3 (with substantially all of cyan colorant fluid 140-1 and magenta colorant fluid 140-2 remaining in reservoirs 130-1 and 130-2. Note that, similar to grayscale pixel 110B, the shade of yellow is controlled by controlling the amount of yellow colorant fluid 140-3 transferred into display chamber 150-3. For example, a relatively light yellow appearance 101C2 is generated by transferring a relatively small amount of yellow colorant fluid 140-3 from reservoir 130-3 to display chamber 150-3, and a relatively dark yellow appearance 101C2 is generated by transferring a relatively large amount of yellow colorant fluid 140-3 from reservoir 130-3 to display chamber 150-3. According to known techniques, the CMY colorant fluids are combinable to produce a desired (subtractive) color. For example, as indicated in Fig. 7(C) and 8(C), predetermined amounts of cyan colorant fluid 140-1 and yellow colorant fluid 140-3 are transferred by pumps 170-1 and 170-3 into display chambers 150-1 and 150-3, respectively (no magenta colorant fluid 140-2 is transferred into display chamber 150-2), thereby producing a green pixel appearance 101C3. Similarly, as indicated in Fig. 7(D) and 8(D), cyan colorant fluid 140-1, magenta colorant fluid 140-2 and yellow colorant fluid 140-3 are transferred by pumps 170-1 to 170-3 into display chambers 150-1 to 150-3, respectively, thereby producing a black pixel appearance 101C4. Those skilled in the art will recognize that, in the manner illustrated above with reference to Figs. 7(A) to 7(D), pixel 110C is digitally controllable to display substantially all colors by transferring corresponding predetermined amounts of CMY colorant fluids 140-1 to 140-3 into display chambers 150-1 to 150-3. In an alternative embodiment, black colorant fluid is provided in a fourth microfluidic system (i.e., CMYK instead of CMY) to provide more complex but deeper black (contrast).

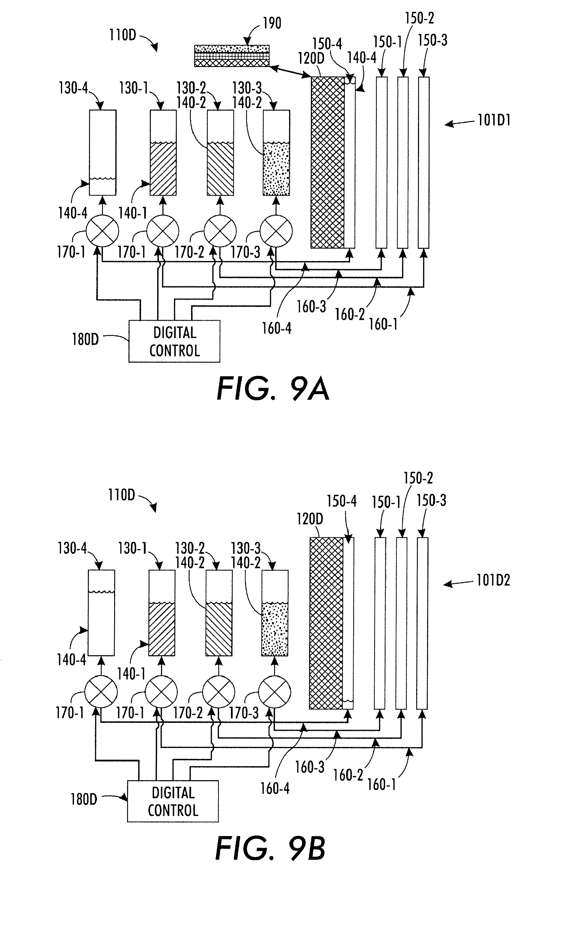

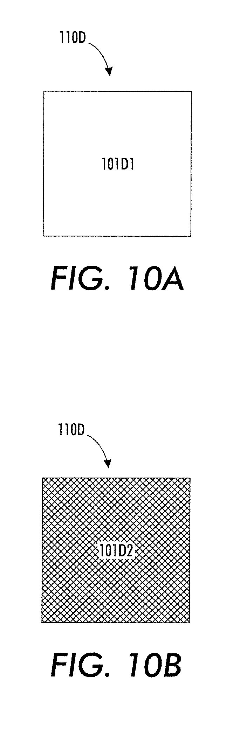

Figs. 9(A) and 9(B) are cross-sectional side views showing a variable background color pixel 110D according to another simplified specific embodiment of the present invention, and Figs. 10(A) and 10(B) are front views the display surface of pixel 110D during operation. Variable background color pixel 110D is substantially the same as color pixel 110C (described above), but includes a background (fourth) microfluidic system and an optional macrofluidic system that facilitate changing the background color. Similar to the "color" microfluidic systems, the background microfluidic system includes a fourth reservoir 130-4 disposed on the rear side of wall/chamber 120D, a background (fourth) colorant fluid 140-4, a transparent fourth display chamber 150-4 disposed between a wall/chamber 120D and display chambers 150-1 to 150-3, a fourth conduit 160-4 communicating between fourth reservoir 130-4 and fourth display chamber 150-4, and a fourth pump 170-4. Display chamber 150-4 is selectively changed on the pixel level, like all the other display chambers, but wall/chamber 120D is selectively changed at the tile level by filling its cavity with a colorant selected from a tile/panel reservoir 190 using a pump or other "macroscopic" means. In one embodiment, the color of the fluid disposed in wall/chamber 120D constitutes a selected background color, and colorant fluid 140-4 is an opaque neutral color (e.g., white) that is selectively pumped into display chamber 150-4 to generate CMY colors (e.g., as indicated in Figs. 9(A) and 10(A)), or pumped out of display chamber 150-4 to expose the background color of wall/chamber 120D in a pixilated fashion (e.g., as shown in Figs. 9(B) and 10(B)).

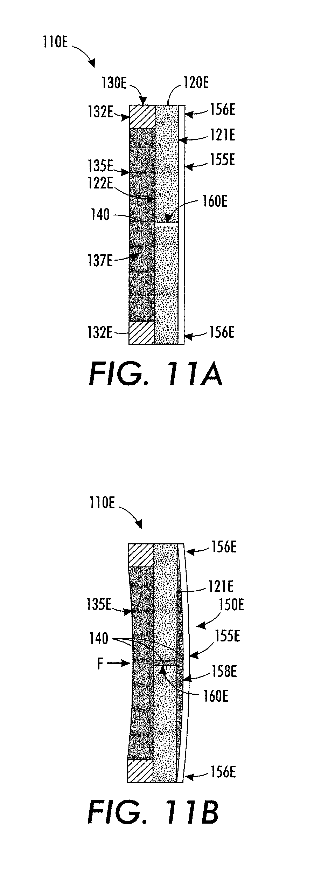

Figs. 11-18 illustrate pixel constructions according to several simplified specific pixel constructions that facilitate the grayscale and multi-color pixel operations described above. Those skilled in the art will recognize that variations to the specific pixel constructions are possible. Therefore, the described pixel constructions are intended to be illustrative, and not limiting to the claims unless the described structures are specifically recited.

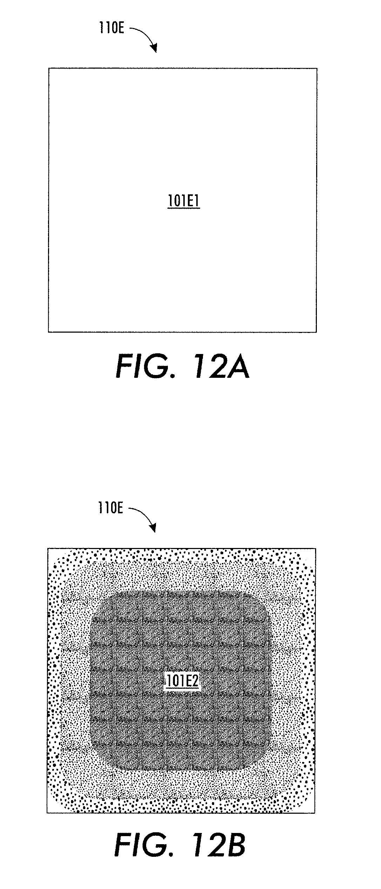

Figs. 11(A) and 11(B) are cross-sectional side views showing a bladder-type pixel 110E according to an embodiment of the present invention, and Figs. 12(A) and 12(B) are front views showing the display surface of pixel 110E during operation. Bladder-type pixel 110E includes a wall 120E, a reservoir 130E, a colorant fluid 140E, a display chamber 150E, a conduit 160E, and a pump (not shown) for forcing colorant fluid 140E from reservoir 130E to display chamber 150E through conduit 160E. Wall 120E has a front surface 121E and a rear surface 122E, and reservoir 130E includes a rigid frame 132E, a deformable wall 135E having peripheral edges supported by frame 132E, and a reservoir chamber 137E defined by deformable wall 135E, rear surface 122E, and frame 132E.

In accordance with an aspect of the present embodiment, display chamber 150E includes an elastomeric membrane 155E having a peripheral edge 156E that is secured (e.g., by adhesive) to front surface 121E of wall 120E, whereby the inside surface of the central region of elastomeric membrane 155E is resiliently pressed against the central region of front wall 121E when pixel 110E is in the first operating state, shown in Figs. 11(A), in which substantially all of colorant fluid 140E is disposed in reservoir 130E, whereby display surface portion 101E1 has a white appearance produced by front wall 121E, as shown in Fig. 12(A). As indicated in Fig. 11(B), with this arrangement a pocket 158E is formed between elastomeric membrane 155E and front wall 121E for receiving colorant fluid 140E.

In accordance with another aspect of pixel 110E, conduit 160E comprises one or more micro-channels defined wall 120E such that colorant fluid 140E passes between reservoir 130E and a central portion of display chamber 150E. In one embodiment, 250 µm circular through-holes are provided for a 10mm pixel, where each hole connects to the display chamber on front side, and either directly to the reservoir chamber on the backside, or via more complex fluid pathways on the backside. More complex pathways can be made by laminating sheets together with appropriate slots or other cutouts in each layer. Cutouts and circular through holes can be made with laser cutting, die cutting or other mechanical (molding) or non-mechanical (e.g., etching or lithography) methods. As shown in Fig. 11(B), to produce a colored appearance, the pump (not shown) applies a pressing force F on deformable wall 135E of reservoir 130E. Pressing force F deforms deformable wall 135E such that chamber 137E is collapsed, thereby forcing colorant fluid 140E through conduit 160E against the inside surface of elastomeric membrane 155E. As colorant fluid 140E enters pocket 158E, membrane 155E expands outward, allowing colorant fluid 140E to cover inside surface 121E, whereby display surface portion 101E2 (Fig. 12(B)) assumes a "colored" appearance. As the force F increases, more colorant fluid 140E is transferred into pocket 158E, causing elastomeric membrane 155E to expand further, which causes the "colored" appearance to darken. A reduction in the pump force F on deformable wall 135E will allow elastomeric membrane 155E to resiliently deform to its original (e.g., flat) shape, and colorant fluid 140E will travel through conduit 160E back into reservoir 130E. The variable displacement of colorant fluid 140E and elastomeric membrane 155E with respect to applied force F provides a range of predictable (and thus, reliably reproducible) colorant optical densities.

The present inventors feel bladder-type pixel 110E is inherently more significant for reflective large format displays, particularly those viewed from significant distance, that only require large pixels (e.g. 2 to 20 mm), and that only need to refresh slowly (e.g., in the range of 100 milliseconds to three minutes), and less so for small and/or fast switching pixels. That is, bladder-type pixels may not be suitable for pixels smaller than 1mm pixels because they may not be producable at a reasonable cost. A possible limitation of bladder-type pixel 110E in other applications may be that coloration may be limited in the peripheral regions of front surface 121E. As indicated in Fig. 11(B), due to the peripheral connection of elastomeric membrane 155E, a thicker layer of colorant fluid 140E is disposed in the central portion of pixel 110E than in the peripheral regions, whereby, as shown in Fig. 12(B), display surface portion 101E2 has a darker central region and a relatively wide peripheral region that is substantially white. Another possible disadvantage of bladder-type pixel 110E is that it may be necessary to employ additional methods to completely pump colorant fluid 140E back into reservoir 130E. These methods may include surface chemistry modifications to the internal fluid structure of the colorant fluid. This may help to control and provide both wetting and dewetting conditions. One procedure would be to fill the pixel cavities with an optically clear oil first, then displace the oil with immiscible ink to make the pixel dark. The oil wants to wet the walls, the ink does not want to wet the walls. Expectation is that the plastic walls will always retain a very thin film of oil. The inventors believe this leads to more control, and also mitigates possible staining of the walls by the ink. In the gravity fed approach (discussed below), the oil/ink interface is expected to be well controlled, as opposed to pushing ink alone in a hydrophobic pixel chamber. Alternatively, a "zeroing" force maybe applied to the viewing side of the chamber bladder, which can be done by packaging/sealing the front side of the panels under a pressure higher than one atmosphere, so that the pixel pumps actuate against a Delta P. If necessary, a Delta P can also be applied by a conventional pump at the panel level. This zeroing force may be necessary to completely return the bladder to its original position and displace all of the colorant. This may be necessary in case the stretching force of the membrane or the stiffness of the diaphragm does not provide a large enough restoring force.

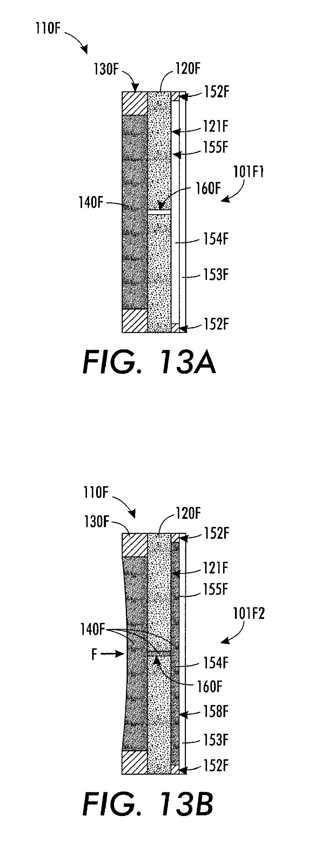

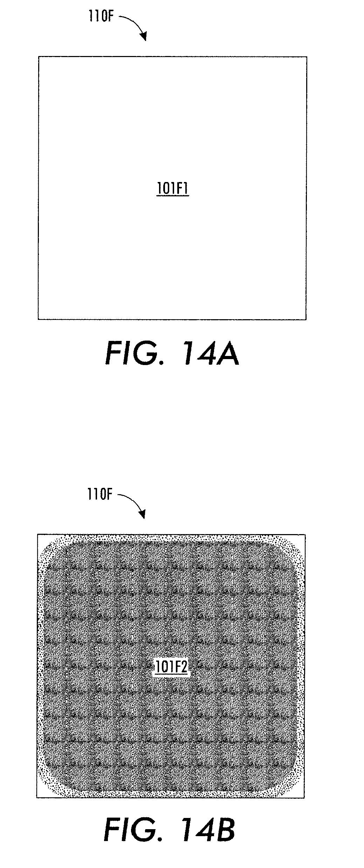

Figs. 13(A) and 13(B) are cross-sectional side views showing a diaphragm-type pixel 110F according to another embodiment of the present invention that addresses the non-uniform coloration problem associated with bladder-type pixel 110E, and Figs. 14(A) and 14(B) are front views the display surface of pixel 110F during operation. Diaphragm-type pixel 110F includes a wall 120F, a reservoir 130F, a colorant fluid 140F, and a micro-channel conduit 160F that are substantially identical to those of bladder-type pixel 110E (described above), and therefore the description of these components is omitted for brevity.

In accordance with an aspect of the present embodiment, display chamber 150F includes a peripheral frame 152F and a rigid transparent wall 153F that cooperate with front surface 121F of wall 120F to define a fixed volume chamber 154F, and a "baggie-type" membrane 155F having a peripheral edge that is secured (e.g., by adhesive) to front surface 121F of wall 120F by frame 152F. Unlike elastomeric membrane 155E of bladder-type pixel 110E, membrane 155F is relatively flaccid when pixel 110F is in the first operating state, shown in Figs. 13(A), in which substantially all of colorant fluid 140F is disposed in reservoir 130F (i.e., display surface portion 101F1 has a white appearance produced by front wall 121F, as shown in Fig. 12(A)). Membrane 155F is similar to membrane 155E (discussed above, but may include a material having a greater elasticity. As shown in Fig. 13(B), to produce a colored appearance, a pump (not shown) applies a pressing force F on reservoir 130F in the manner described above, thereby forcing colorant fluid 140F through conduit 160F against an inside surface of membrane 155F, causing colorant fluid 140F to begin to fill a pocket 158F defined between the inside surface of membrane 155F and front surface 121F. As colorant fluid 140F enters pocket 158F, membrane 155F expands outward to fill fixed volume chamber 154F, causing colorant fluid 140F to cover inside surface 121F, whereby display surface portion 101F2 (Fig. 14(B)) assumes a "colored" appearance. Note that because the outward expansion of the membrane 155F is restricted by rigid transparent wall 153F, colorant fluid 140F forms in a substantially uniform thickness, as compared with that of bladder-type pixel 110E. As the force F increases, more colorant fluid 140F is transferred into pocket 158F, causing membrane 155F to expand such that it fills the entirety of fixed volume chamber 154F. Note that by providing a thin frame 152F, the uniform thickness of colorant fluid 140F extends to nearly the outermost periphery of pixel 110F, whereby a fill-factor of diaphragm-type pixel 110F is believed to be greater than that of bladder-type pixel 110E. A subsequent reduction in the pump force F on reservoir 130F causes elastomeric membrane 155F to deform to its original (e.g., flat) shape, and colorant fluid 140F travels through conduit 160F back into reservoir 130F.

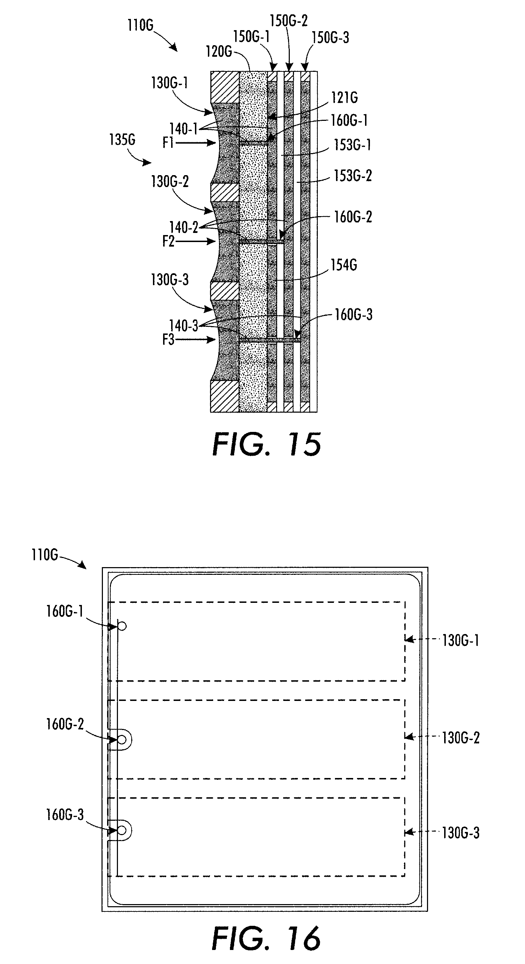

In addition to exhibiting a more uniform appearance and greater fill-factor, another advantage of diaphragm-type cell 110F over bladder-type cell 110E (see Fig. 11(A)) is that diaphragm-type cell 110F more easily facilitates stacking for generating spatially serial display chamber configurations used for CMY color pixels, as described below with reference to Figs. 15 and 16.

Figs. 15 and 16 are cross-sectional side and front views, respectively, showing a color diaphragm-type pixel 110G according to another simplified specific embodiment of the present invention. Pixel 110G is illustrated with three independent microfluidic systems for transferring three different colorant fluids 140-1 to 140-3 between three separate reservoirs 130G-1 to 130G-3 and three display chambers 150G-1 to 150G-3 using the techniques described above. As indicated in Fig. 16, reservoirs 130G-1 to 130G-3 are arranged in a spatially parallel arrangement, and as indicated in Fig. 15, are subjected to separate pump forces F1 to F3. Each display chamber 150G-1 to 150G-3 is substantially identical to display chamber 150F of diaphragm-type pixel 110F, discussed above, but are stacked in a spatially serial arrangement such that first display chamber 150G-1 is mounted onto front surface 121G in the manner described above, second display chamber 150G-2 is mounted onto a front surface of transparent rigid wall 153G-1, and third display chamber 150G-3 is mounted onto a front surface of transparent rigid wall 153G-2. With this arrangement, each display chamber 150G-1 to 150G-3 is independently operated substantially as described above with reference to diaphragm-type pixel 110F to produce a selected color (e.g., CMY) display.

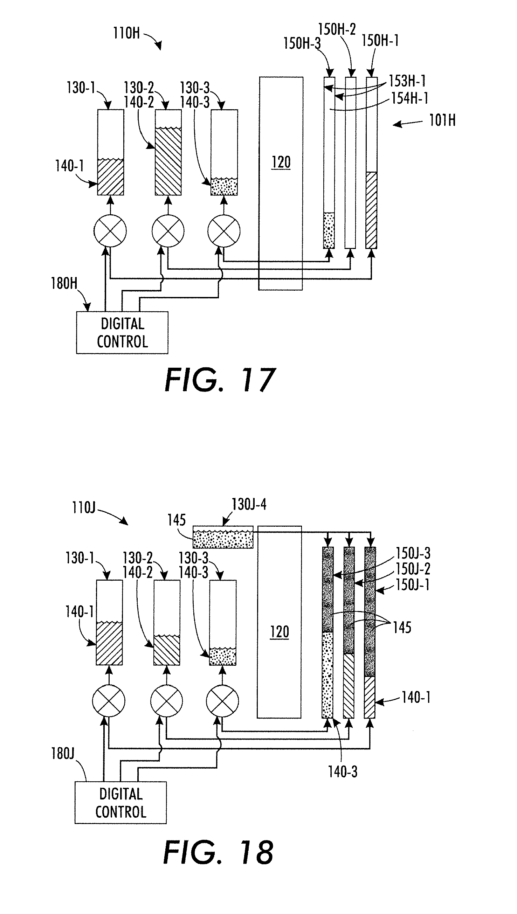

Fig. 17 is cross-sectional side view showing a gravity-fill pixel 110H according to another simplified specific embodiment of the present invention. Similar to the pixels described above, gravity-fill pixel 110H includes one or more microfluidic systems (e.g., one for monochrome displays, at least three for color mixing displays, such as the exemplary 3-color CMY subtractive system, as disclosed in Fig. 17) that are similar to those described above. Each microfluidic system includes an associated reservoir 130-1 to 130-3 for storing an associated colorant fluid 140-1 to 140-3, and a pump and conduit arrangement similar to that described above for transferring colorant fluids 140-1 to 140-3 into display chambers 150-1 to 150-3. Each display chamber (e.g., display chamber 150-1) includes parallel rigid walls 153H-1 that define a cavity 154H-1. When colorant fluid 140-1 is selectively transferred into display chamber 150H-1, it fills cavity 154H-1 to a level determined by the volume of colorant fluid 150H-1 transferred from reservoir 130-1. Therefore, the brightness of display surface portion 101H is determined by amount of colorant fluid 140-1 to 140-3 that is transferred into display chambers 150-1 to 150-3 (i.e., the amount of white front surface 121H covered by colorant fluid), and the color or display surface portion 101H is determined by the combination of colorant fluids 140-1 to 140-3 that are transferred into display chambers 150-1 to 150-3. Although three microfluid systems are depicted in Fig. 17, any number of microfluid systems may be utilized.

Fig. 18 is cross-sectional side view showing a second gravity fill color pixel 110J according to another simplified specific embodiment of the present invention. Pixel 110J addresses a possible deficiency of gravity-fill pixel 110H (Fig. 17) by providing a second fluid 145 that feeds into the upper end of display chambers 150J-1 to 150J-3. By selecting fluid 145 such that it is immiscible with and floats on colorant fluids 140-1 to 140-3 (e.g., wherein the colorant fluids comprise pigment in an aqueous solution and fluid 145 is an oil), fluid 145 serves to force colorant fluids 140-1 to 140-3 out of chambers 150J-1 to 150J-3 and back into reservoirs 130-1 to 130-3 when desired, whereby residual colorant fluid is prevented from sticking to the inside surfaces of chambers 150J-1 to 150J-3. That is, fluid 145 is immiscible and is substantially different in terms of density or wetting characteristics than colorant fluids 140-1 to 140-3. For small gaps, the differential wetting properties may be more important than the density differences. A shared reservoir 130J-4 is provided to gravity feed oil 145 into display chambers 150J-1 to 150J-3 as shown.

In addition to the bladder/baggie in which ink volume determines the "horizontal" ink thickness and gravity feed type pixels in which the ink volume determines vertical fill height, both described above, aspects of the present invention may be implemented using a third type of pixel that fills uniformly, but ink volume determines optical density. In one embodiment, such an optical density control type pixel includes a "sponge" or other porous sponge-like material disposed a display chamber. The sponge serves to soak up colorant fluid, and the pixel gets darker as more colorant fluid is absorbed, and gets lighter again when oil is used to preferentially displace the water based colorant fluid in the sponge. By controlling the amount of fluid absorbed in the sponges disposed in a series of superimposed display chambers, a desired color is achieved.

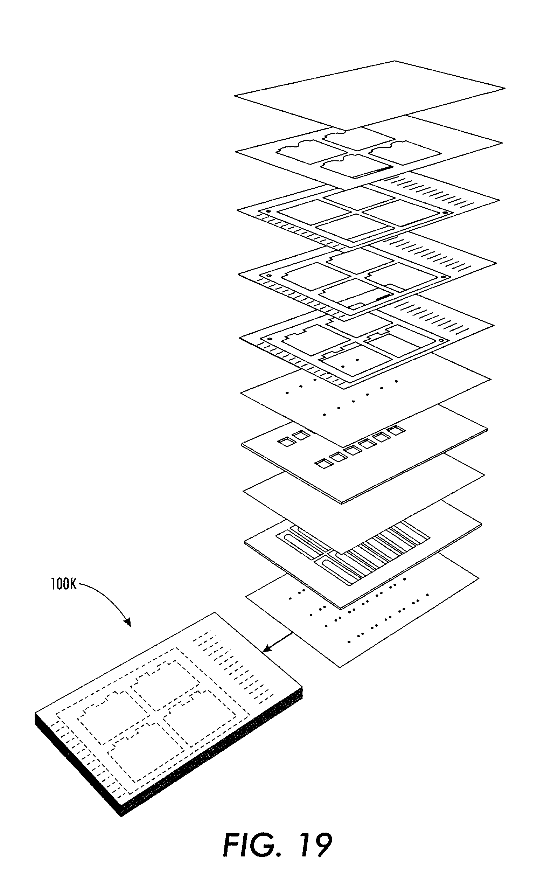

According to another aspect of the invention, the scale of the pixel cells is on the order of 2 to 20 mm, and therefore macromachining techniques are applicable. As indicated in Fig. 19, in one embodiment, a pixel 110H is fabricated by micromachining associated features into polymer sheets using one of lithography-based micromachining (this would only be necessary for small pixels), or by conventional (more in the 'milli'machining scale than the 'micro'machining scale) machining techniques, e.g., to produce relatively large pixels, such as those described herein. In one embodiment, the holes in each layer are laser drilled, but may also be die-cut (punched) or molded. In another embodiment, the structures are made by laminating patterned (i.e. lasered) plastic foils together. The lamination can be done with pressure only (e.g., using a pressure sensitive dry-film adhesive) or with heat and pressure (thermal dry film adhesive). The adhesive is typically a lot thinner than the plastic film itself. The fluidic chambers can be fabricated using many types of transparent polymers, such as acrylics or polycarbonates due to their thermal, mechanical and chemical properties as well as their common use in many industries. In another embodiment, hermetic structures are utilized for long term composition stability of encapsulated colorants. It is possibly that fluid and/or gas impermeable coatings are needed on the plastics. This depends on the required lifetime of the display. Coating with Parylene is an option, or using commercial plastic films that are pre-coated with an inorganic oxide, for example.

Large format displays produced in accordance with the various embodiments disclosed above provide multiple advantages over conventional printed and LED billboards. A primary advantage is weight. Because large format devices are primarily constructed using polymer and are relatively thin, their weight will be significantly less than their LED counterparts. This will allow for currently grandfathered billboards to be retrofitted without significant regulatory interaction. Moreover, the CMY color basis provided by the spatially serial arrangements described herein will provide for a wider color gamut than RGB based designs (only necessarily true on reflective mode, not emissive mode). The layered construction can also be modularized so that repair of defective or malfunctioning sections of a display is easy, cheap and fast (i.e., by replacing one pixel or a panel of pixels). The reflective pixels use light sources that are in place and accepted by local governments, and are therefore suited for sunny environments and the viewing quality is less susceptible to weather conditions. When used in combination with the electrochemical pump mentioned herein, the electrolysis provided by the electrochemical pump is bistable, and color actuation occurs by applying a given amount of electrical energy. The generated bubbles are stable, so the color remains unchanged without the subsequent application of energy, i.e., the color remains stable until a selected current is applied. This offers significantly cheaper operation versus other digital billboard methods. Another advantage is that the manufacturing methods used to produce the various pixels are simple and conventional.

Although the present invention has been described with respect to certain specific embodiments, it will be clear to those skilled in the art that the inventive features of the present invention are applicable to other embodiments as well, all of which are intended to fall within the scope of the present invention. Although described as reflective, display 100 may be transmissive as well by producing wall 120 using a light transmissive material, and placing a light source such that light is directed through wall 120 and display chambers 150, or directed from the side of wall 120. Further, although the present invention is described with specific reference to large format displays, the pixel structure described herein may be utilized in the production of displays of any size. In addition, regular calibration may be needed to keep the color constant over time (i.e., to address long term drift, temperature changes, air pressure changes, etc.). One approach to do this would be to include temperature sensors, pressure sensors, etc., and to use built-in calibration tables. A particularly inexpensive way to achieve this is to implement closed loop feedback control on the outer most loop: i.e., a camera with color filters continuously observes the image being displayed on the billboard, and the difference between the actual displayed color and predetermined intended color (i.e., stored data) is used to perform an autocorrect function.

## Claims

1. A display (100) having a display surface (101) formed by a plurality of pixels (110) arranged in an array such that each pixel (110-X) forms a corresponding display surface portion (101-X),
wherein each pixel (110-X) comprises:
a wall (120) including a front surface (121) and an opposing back surface (122), the front surface (121) having a predetermined first appearance; and
a first microfluidic system including:
a first reservoir (130) disposed on a first side of the wall over the back surface (122);
a first colorant fluid (140);
a transparent first display chamber (150) disposed on a second side of the wall over the front surface (121) such that said front surface (121) is viewable through said first display chamber (150);
a first conduit (160) communicating between the first reservoir and the first display chamber; and
a first fluid actuator (170) for selectively transferring the first colorant fluid (140) between the first reservoir (130) and the first display chamber (150) through the first conduit, whereby the corresponding display surface portion (101-X) of said each pixel (110-X) is selectively changeable between said predetermined first appearance generated when substantially all of said first colorant fluid (140) is transferred into the first reservoir (130), and a second appearance generated when a selected amount of said first colorant fluid is transferred into said first display chamber (150).

2. The display of Claim 1, further comprising a digital control circuit (180) and a backplane for transmitting control signals to the first fluid actuator (170) of each of the plurality of pixels.

3. The display of Claim 1, wherein the display surface has a width of at least three ft. and a height of at least three ft.

4. The display of Claim 1, wherein the first colorant fluid of each of said plurality of pixels is opaque.

5. The display of Claim 1, wherein the first colorant fluid of each of said plurality of pixels is translucent, and wherein the display further comprises means for controlling the selected amount of said first colorant fluid transferred into said first display chamber such that said corresponding display surface portion is selectively changeable between a relatively light shade, a relatively dark shade, and a medium shade that is between the relatively light shade and the relatively dark shade.

6. The display of Claim 1, further comprising at least one additional microfluidic system, each of said at least one microfluidic systems including an associated reservoir disposed on the first side of the wall, an associated colorant fluid, an associated transparent second display chamber disposed on the second side of the wall, an associated conduit communicating between the associated reservoir and the associated display chamber, and an associated fluid actuator for selectively transferring the associated colorant fluid between the associated reservoir and the associated display chamber, wherein the first display chamber and the at least one associated display chamber are disposed such that said front surface is viewable through at least one of said first display chamber and said at least one associated display chamber.

7. The display of Claim 6,
wherein the at least one additional microfluidic system includes a second microfluidic system including a second colorant fluid and a second display chamber, and a third microfluidic system including a third colorant fluid and a third display chamber, and
wherein the first, second and third display chambers are arranged in a spatially serial configuration such that front surface is only viewable through each of said first, second and third display chambers.

8. The display of Claim 7, wherein the first colorant fluid comprises a cyan dye, the second colorant fluid comprises a magenta dye, and the third colorant fluid comprises a yellow dye.

9. The display of Claim 7,
wherein said second microfluidic system includes a second fluid actuator and said third microfluidic system includes a third fluid actuator, and
wherein said display further comprises means for digitally controlling said first, second and third fluid actuators, whereby the corresponding display surface portion of said each pixel is selectively changeable between said predetermined appearance generated when substantially all of said first, second and third colorant fluids are respectively transferred into the first, second and third reservoirs, and a second appearance generated when a selected amount of at least one of said first, second and third colorant fluids is transferred into an associated one of said first, second and third display chambers, respectively.

10. The display of Claim 7, further comprising a background fluidic system including a fourth reservoir disposed on the first side of the wall, a fourth colorant fluid, a transparent fourth display chamber disposed on the second side of the wall, a fourth conduit communicating between the fourth reservoir and the fourth display chamber, and a fourth fluid actuator for selectively transferring the fourth colorant fluid between the fourth reservoir and the fourth display chamber through the fourth condui, wherein the fourth display chamber is disposed between the front surface and the first, second and third display chambers.

11. The display of Claim 10, wherein the fourth colorant fluid comprises a white fluid, and wherein the wall comprises a chamber that is filled on a tile/panel level with a background colorant fluid.

12. The display of Claim 1, wherein the first conduit comprises one or more micro-channels defined through the wall.

13. The display of Claim 12, wherein the first display chamber comprises an elastomeric membrane having a peripheral edge that is secured to the front surface of the wall, whereby an inside surface of the elastomeric membrane is resiliently pressed against the front surface when substantially all of said first colorant fluid is transferred into the first reservoir.

14. The display of Claim 12, wherein the first display chamber comprises a first fixed volume chamber defined by the front surface, a first peripheral frame, and a first rigid transparent wall mounted on the frame, and a first membrane disposed in the fixed volume chamber and having a peripheral edge that is secured to the front surface of the wall, whereby said first colorant fluid passing through the first conduit enters a first pocket defined between the first membrane and the front surface, and an outward expansion of the first membrane is restricted by the first rigid transparent wall.

15. The display of Claim 14, further comprising a second microfluidic system including an associated transparent second display chamber mounted in a spatially serial relationship over the first rigid transparent wall.
